# EUROPEAN PATENT APPLICATION

(11) **EP 1 544 826 A2**
(43) Date of publication of application: **22.06.2005**
(21) Application number: 04257915.1
(22) Date of filing: 17.12.2004
(51) Int. Cl.: G08C 17/02

(54) **Method, system and device for registering specific information to information unit having communications function**

(30) Priority: 18.12.2003 JP 2003421390; 07.12.2004 JP 2004354570
(71) Applicant: Omron Corporation, Kyoto-shi, Kyoto 600-8530 (JP)
(72) Inventor: Shimizu, Takanobu, Omron Corp., Shimogyo-ku, Kyoto-shi, Kyoto 600-8530 (JP); Hisano, Atsushi, Omron Corp., Shimogyo-ku, Kyoto-shi, Kyoto 600-8530 (JP); Oyagi, Masayuki, Omron Corp., Shimogyo-ku, Kyoto-shi, Kyoto 600-8530 (JP); Koike, Tomoyuki, Omron Corp., Shimogyo-ku, Kyoto-shi, Kyoto 600-8530 (JP)
(74) Representative: Calderbank, Thomas Roger

(57) **Abstract**

Specific information is registered to only as sensor, which is arranged adjacently to a base unit, by way of a radio output from the base unit. The radio output is a faint radio wave for short-range communications by which the base unit can be communicable with only the sensor adjacently arranged. Then, the specific information is registered to only another sensor, which is arranged adjacently to the sensor with the registered specific information, by way of a radio output from the sensor with the registered specific information. The radio output is a faint radio wave for short-range communications by which the communications can be made only between the sensors arranged adjacently to each other. The specific information registration is sequentially repeated between the sensors arranged adjacently to each other.

## Description

The present invention relates to a method, a system and a device for registering specific information to an information unit having a communications function, an information unit having a communications function, and a method and a system for managing specific information. The specific information refers to, for example, a group ID number for identifying an information unit group, a node number for identifying an individual information unit and the attributes of sensing information detected by the information unit. The information unit refers to a sensor or an actuator for storing predetermined information as well as an information unit in general having a memory function for storing information to be registered from outside. Among these information units as an object of the invention, a sensor is described in detailed as an example of information unit.

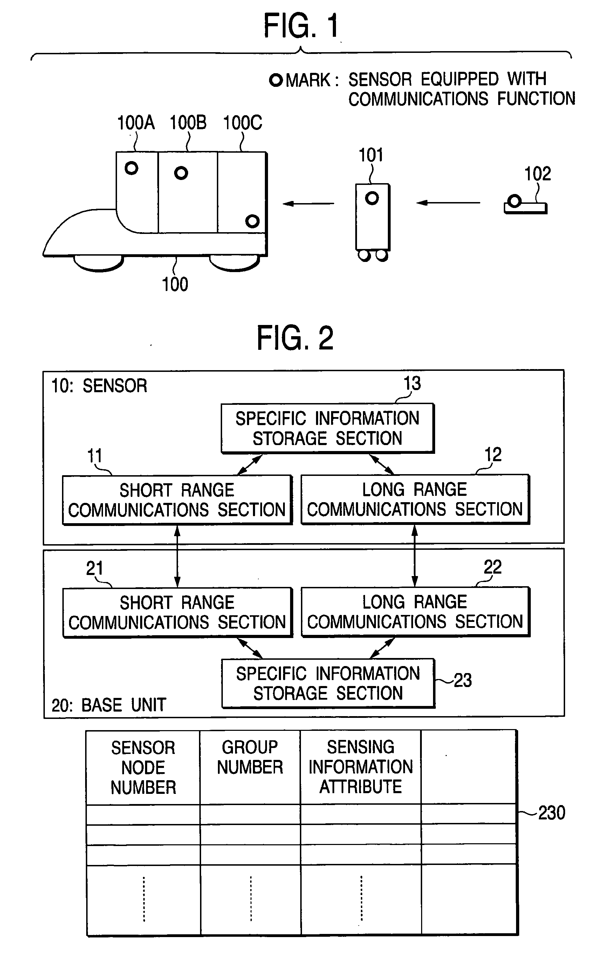

According to the related art, it is necessary to previously allocate sensor ID information to each sensor when a sensor information base unit collects sensor information from a plurality of sensors equipped with a communications function. The sensor ID information previously allocated to each sensor is transmitted to the sensor information base unit together with detected sensor information to identify from which sensor an individual item of sensor information is received. For example, as shown in Fig. 1, a plurality of temperature information items from a plurality of temperature sensors installed in the freight compartment of a large truck 100 are received by a sensor information base unit 20 (refer to Fig. 2) placed before a driver's seat. In this case, the sensor information base unit 20 receives the temperature information from individual sensors over wireless communications and performs a temperature management. The plurality of temperature sensors are installed in the freight compartment of the truck because the freight compartment is partitioned into a plurality of cells 100A, 100B and 100C with dividers and the temperature management is required for each of the individually partitioned cells 100A, 100B and 100C. In this example, a separate group ID is allocated to the sensor in each cell and the sensors transmit sensor information as well as the group ID to the sensor information base unit 20.

To allocate the group ID number to each sensor, it is possible to mount a DIP switch on each sensor and register a group ID number per cell by manipulating the DIP switch. While registration of the group ID number by using the DIP switch is smooth when the sensors are rather small in number, the procedure becomes a cumbersome task in case a large number of sensors are installed in each cell. On the sensor information base unit, it is necessary to prepare a list of cells versus group ID numbers of the sensors. Such an approach is rather impractical. In particular, the staff in a truck freight distribution depot and truck drivers must perform the above manipulation, which presents a difficult problem in terms of operability. In case group ID numbers are allocated to the sensors in a short time while a truck dispatch scheduling is made, the problem is even more difficult.

Japanese Patent Laid-Open No. 196029/1999 discloses a wireless communications system where sub-group IDs are dynamically allocated to a plurality of arbitrary wireless units constituting the wireless communications system, and the sub-group IDs are used to configure a new sub-group, within whichbroadcastdatacommunications are allowed. In this system, a wireless unit having an authority informs another wireless unit of a sub-group recognition number to be used for broadcast data communications by a logic control channel. This related art may be used to register a group ID number to the sensors equipped with a communications function. Note that, according to this method, a group ID number is registered via wireless communications between the sensor information base unit having an authority and the sensors. In this example, allocating a group ID number to the sensors installed in a predetermined cell of a truck involves a high risk of a wrong group ID number to be registered with a communications radio wave transmitted to other unrelated sensors. In particular, numerous trucks are parked side by side in a truck freight distribution depot. It is thus readily possible to pick up a radio wave for group ID number registration from an unrelated sensor information base unit. It is necessary to provide a method for readily registering a correct group IDnumber to each sensor via wireless communications. For example, in case a temperature sensor is installed per basket wagon 101 or tray 102 in the basket wagon to perform the temperature management as shown in Fig. 1, as well as a case where a truck freight compartment is partitioned into cells, it is necessary to allocate group ID numbers to a large number of sensors in a short time. The related art approach is impractical in this respect.

The invention has been accomplished in order to solve the aforementioned problems. A first object of the invention is to allocate, readily and reliably, specific information such as a group ID number to a plurality of sensors equipped with a communications function from a sensor information base unit without interference of an unrelated wireless communications radio wave. The specific information includes the group ID, the node number of the sensor on a communications network, attribute information to be detected by the sensor.

A second object of the invention is to transmit, readily and reliably, specific information to a sensor information base unit from a plurality of sensors equipped with a communications function, without interference of an unrelated wireless communications radio wave.

In order to attain the objects, there is provided a method for registering specific information to a sensor equipped with a communications function from a base unit by radio, the method comprising: registering specific information from a base unit to a sensor equipped with a communications function arranged adjacently to the base unit by radio output for short-range communications from the base unit communicable with only the sensor arranged adjacently to the base unit; sequentially repeating a step of registering specific information from the sensor having the registered specific information to another sensor equipped with a communications function arranged adjacently to the sensor having the registered specific information by radio output for short-range communications from the sensor having the registered specific information communicable with only the another sensor.

According to this method, the communications is made only between a base unit and a sensor arranged adjacently to the base unit over radio output for short range communications, and is made only between adjacent sensors over radio output for short range communications. This eliminates the risk of a radio wave being leaked to an unrelated sensor. The specific information includes a sensor group ID number and a node number. It is thus possible to readily allocate, e.g., the same sensor group number per truck, basket wagon or tray. The radio output for short range communications refers to, e.g., existing radio means such as a predetermined faint radio wave, infrared rays, a sonic wave, a laser wave, and an oscillatory wave for short range communications.

In a method for registering specific information to a sensor equipped with a communications function from a base unit by radio, it is allowed to register, by way of short range communications using a faint radio wave in a radio wave shielding enclosure accommodating the sensor, the specific information to one or more sensors equipped with a communications function in the radio wave shielding enclosure from the base unit. In an environment of a radio wave shielding enclosure where a radio wave does not leak outside, it is possible to reliably register specific information to only the sensors installed therein.

Further, the method may comprise a step of allowing registration of specific information to a sensor installed in the radio wave shielding enclosure only when the radio wave shielding enclosure is shut and it is confirmed that the enclosure is shielded from the outside in terms of wireless communications. This ensures that only correct specific information can be registered to a sensor, withoutwrong specific information being registered by way of an unwanted radio wave from another base unit.

Further, the invention provides a system for registering specific information to a sensor equipped with a communications function, the system comprising: a base unit having a short range communications section for performing short range communications by way of a faint radio wave for short range communications; and a sensor equipped with a communications function arranged adjacently to the short range communications section of the base unit, the sensor including a short range communications section for performing short range communications by way of a faint radio wave for short range communications and performing short range communications with the base unit by way of radio output for short range communications via the short range communications section. The sensor may perform short range communications over a faint radio wave via the short range communications section in order to register specific information to another adjacent sensor.

Another system for registering specific information may comprise: a base unit including a short range communications section for performing short range communications over a faint radio wave; and one or more sensors equipped with a communications function, the sensors installed in a radio wave shielding enclosure, and to which sensors specific information is registered from the base unit by way of short range communications using a faint radio wave. By using the radio wave shielding enclosure, it is possible to avoid the risk of a sensor being subject to an unrelated radio wave.

Further, corresponding to the system, there are provided a device as a base unit for registering specific information to a sensor equipped with a communications function, a sensor equipped with a communications function as a subordinate unit, the sensor comprising specific information such as a sensor group ID; and a method and a system for managing the base unit and the sensor.

In the method for registering a group ID number of a sensor according to the invention, it is possible to readily allocate specific information such as a group ID number to a plurality of sensors equipped with a communications function from a sensor information base unit without interference of an unrelated wireless communications radio wave. It is also possible to readily and reliably transmit specific information to a sensor information base unit from a limited number of sensors equipped with a communications function without interference of an unrelated wireless communications radio wave. Thus, it is possible to register specific information to, e.g., a plurality of sensors equipped with a communications function installed in a large number of trucks and read specific information therefrom, without interference of an unrelated wireless communications radio wave from a sensor information base unit installed in another adjacent truck or a distribution center.

Embodiments of the invention will now be described by way of non-limiting examples with reference to the accompanying drawings, in which:
Fig. 1 is a conceptual drawing of a case where a plurality of temperature information items froma plurality of temperature sensors installed in the freight compartment of a truck are received by a sensor information base unit installed near the dxiver's seat;
Fig. 2 is a conceptual drawing of a specific information registration system used for a method for registering specific information to a sensor equipped with a communications function according to the invention;
Fig. 3 is a conceptual drawing of a case where specific information from a base unit is transmitted to an adj acent sensor according to the first embodiment of the invention;
Fig. 4 is a conceptual drawing of a case where specific information from a base unit is transmitted to a sensor according to the second embodiment of the invention; and
Fig. 5 is a conceptual drawing explaining the data structure of specific information according to the invention.

Fig. 2 is a conceptual drawing of a specific information registration system used for the method for registering specific information to a sensor equipped with a communications function according to the invention. This system comprises a plurality of sensors equipped with a communications function 10 and a sensor information base unit 20. Each sensor equipped with a communications function 10 comprises a short range communications section 11 for performing short range communications by using a faint radio wave, a long range communications section 12 for performing long range communications and a specific information storage section 13. Similarly, the sensor information base unit 20 comprises a short range communications section 21 for performing short range communications by using a faint radio wave, a long range communications section 22 for performing long range communications and a specific information storage section 23. The short range communications sections 11 and 21, and the long range communications sections 12 and 22 respectively communicate with each other. The short range communications uses, e.g., optical communications means with directivity such as IRDA which communicates in a short range as found in the related art. This means has a communications function which covers a communications range as short as several centimeters.

### [Embodiment 1]

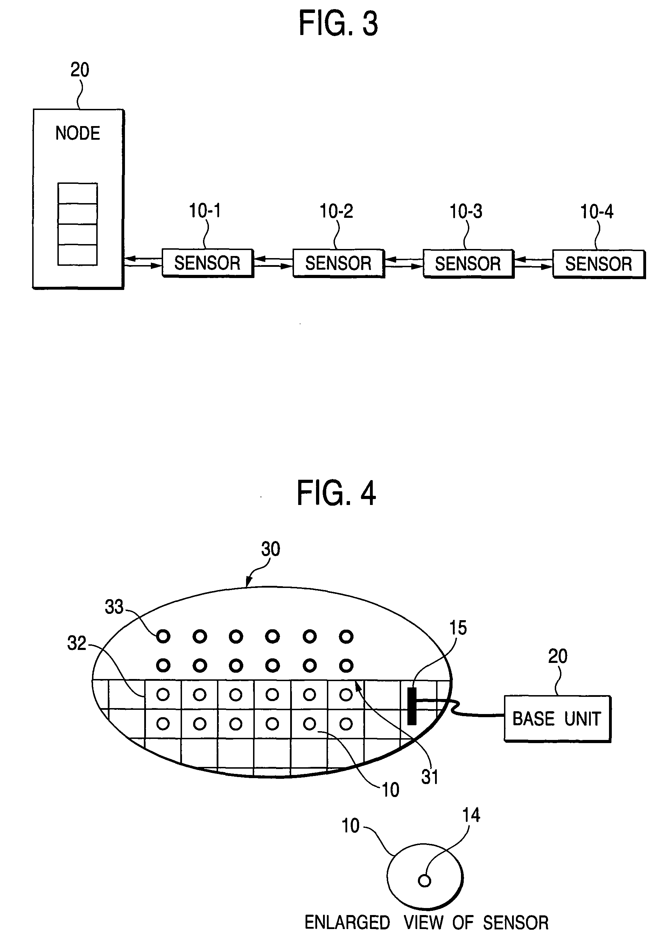

In case specific information is registered to a sensor in a limited communications range, as in the first embodiment shown in Fig. 3, a base unit 20 and a sensor 10-1 are arranged in a short distance where both are in extremely close proximity to each other. Specific information from the base unit 20 is transmitted to only an adjacent sensor 10-1. By way of a short range communications section 11, 21 which uses a faint radio wave, specific information is registered to the sensor 10 over short-range communications of several centimeters. The sensor 10-1 is free from a risk of unrelated wrong specific information being registered by way of a radio wave emitted from another base unit. After that, the sensor 10-1 adjacent to the base unit 20 performs short range communications with another sensor 10-2 by using a faint radio wave. This registration operation is performed between adjacent sensors 10-2 and 10-3, and then between 10-3 and 10-4 to register a sensor group ID number as the same specific information to all of the sensors 10-1 through 10-4. In the first embodiment, a plurality of sensors are arranged inthe proximity to the base unit 20 andmultiple sensors 10 repeats short range communications using a faint radio wave to each other, thereby instantaneously registering the same sensor group ID number.

### [Embodiment 2]

Registration of a sensor group ID number as specific information by the short range communications section may be made in a radio wave shielding enclosure 30 shown in the second embodiment in Fig. 4. The radio wave shielding enclosure 30 comprises two containers designed to open/close with a hinge 31. When closed, the enclosure shields a radio wave from outside. In one container is provided a divider 32 to allow a plurality of sensors 1o to be arranged in predetermined positions. In the other container are provided a plurality of protrusions 33 in positions where registration push switches 14 provided in the center of the top face of the plurality of sensors 10 are pressed. In the radio wave shielding enclosure 30 is provided an antenna 15 electrically connected to the short range communications section 21 of the base unit 20. When the container pair is closed with necessary number of sensors 10 accommodated in the radio shielding enclosure 30, the protrusions 33 presses the registration push switches 14 provided in the center of the top face of the plurality of sensors 10, which causes specific information such as a sensor group ID number to be registered to the sensors from the base unit 20 by radio via the antenna 15. In this example, the radio shielding enclosure 30 shields itself from all radio waves from outside. Thus, even when a similar radio wave used to register specific information is transmitted from a nearby location, no wrong specific information is registered to the sensors in the radio shielding enclosure 30.

The specific information registered to the sensors may be (a) a sensor group ID number and an attribute of sensing information; (b) a node number, a sensor group ID number and an attribute of sensing information; or (c) a node number and an attribute of sensing information. In case separate sensors are installed in the truck cells 100A, 100B and 100C, three separate sensor group ID numbers must be registered. Each sensor group ID number is used to determine from which cell the information is received. In case the temperature in each of the cells 100A, 100B and 100C is to be monitored, the attribute of the sensing information is a temperature constant to be detected by a temperature sensor. The attribute of sensing information depends on the applicationbecause the type of sensor is selected depending on the information to be detected. The node number is an individual sensor ID number allocated to each of the sensors installed in the freight compartment of the truck 100, the sensors already allocated predetermined sensor group ID numbers. By installing sensors to which node numbers are registered per specific location in the freight partition of the truck 100, the temperature management is made more precise.

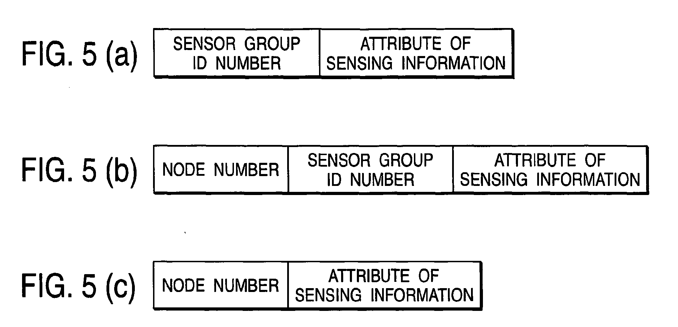

In case specific information is registered to a plurality of sensors, for example the driver of the truck shown in Fig. 1 arranges the sensors in the proximity to the sensor information base unit 20 installed near the driver's seat and registers a predetermined sensor group ID number. This registration may be made in the proximity to the sensor information base unit 20 previously installed in a truck freight distribution depot. Once the sensor group ID number is registered, each sensor is installed in predetermined location to be detected by the driver. In the example of the truck shown in Fig. 1, a plurality of sensors are installed on the walls in the freight compartment, in the basket wagon, and in the tray. After installation, data such as a temperature is detected e.g. inpredetermined intervals and the long range communications section 12 in each sensor equipped with a communications function and the long range communications section 22 in the base unit 20 performs relatively long range communications, which causes a sensor group ID number and a detected temperature data to be transmitted to the base unit, as shown in Fig. 5(a). The long range communications refer to communications in a range where a truck parked in a freight distribution depot can communicate with the office. To be more specific, the range is several tens of meters.

Referring to Fig. 2 again, the received sensor group ID number and detected temperature data are stored as a sensor information list 230 in the main storage section 23 in the base unit 20. Or, detected temperature data may be continuously monitored by the base unit 20 and in case a temperature equal to or more than a predetermined temperature is detected, the driver may be alerted. As shown in Fig. 5(b), more precise temperature detection may be made using a node number allocated per sensor. The node number may be an ID number per sensor generated by the base unit 20. Alternatively, the node number may be incorporated as electronic data from the beginning as a serial number when the sensor equipped with a communications function is manufactured. Or, as shown in Fig. 5 (c) , without registering the group ID number, a node number previously incorporated in each sensor and detected temperature data as an attribute of sensing information may be transmitted from the sensor 10 to the base unit 20 on a routine basis. In this case, as shown in Fig. 3, detected temperature data may be transmitted, as opposed to the aforementioned example, from the sensor to the base unit, from the sensors 10-4, 10-3, 10-2, 10-1 to the base unit 20 over short range communications using a faint radio wave. In other words, it is possible to change the already set temperature data, depending on the situation at the place where the temperature is detected, at a side of a sensor which is subordinate unit, or to set the temperature data to the previously set fixed temperature, at the side of the sensor as subordinate unit. The temperature data changed at the sensor side is sequentially transmitted to an adjacently arranged sensor which is another subordinate unit, and then the changed temperature data is transmitted to the base unit from the subordinate unit arranged adj acently to the base unit. The base unit monitors the changed temperature data, and if the base unit decides that the changed temperature data should be further changed, the base unit may change the setting temperature for the subordinate units. Therefore, the temperature setting can be performed interactively between the base unit placed in the monitoring center and the subordinate units placed in the place where the temperature is detected.

As mentioned above, by registering specific information such as a sensor group ID number by way of short range communications using a faint radio wave between the sensor equipped with a communications function 10 and the sensor information base unit 20, it is possible to prevent wrong data over a radio wave coming from a same adjacent system from being set to the sensor and also possible to set specific information to a plurality of sensors.

It is also possible to provide a fine transportation service, for example, by installing sensors equipped with a communications function to which the specific information is registered in a monitored area such as the inside of the freight compartment and monitoring, in predetermined intervals, the information from sensors installed in respective locations in the freight compartment at the driver's seat. While the specific information in the above example is information from a temperature sensor, the invention is not limited thereto. For example, sensor information from various sensors including a speed sensor, an acceleration sensor, a weight sensor, and a revolution sensor may be transmitted to the base unit together with a sensor group ID number and a node number attached.

While the above-mentioned embodiments refer to sensors for setting temperature within the track, the invention is not limited thereto. The present invention may be applicable to the control or management for each group ID in a refrigeration showcase or refrigerator placed in a supermarket or convenience store. Also, the present invention may be applicable to the control or management for each group ID in various information units to be managed under the management center.

## Claims

1. A method for registering specific information to information units equipped with a communications function as subordinate units, the method comprising:
registering the specific information to a information unit equipped with a communications function as a subordinate unit arranged adjacently to a base unit from the base unit by way of a radio output for short-range communications communicable with only the information unit; and
registering the specific information to another information unit equipped with a communications function as another subordinate unit arranged adjacently to the information unit from the information unit by way of a radio output for short-range communications communicable with only another information unit.

2. The method for registering specific information to an information unit according to claim 1, wherein the specific information includes a group ID number and a node number of the information unit.

3. The method for registering specific information to an information unit according to claim 1, further comprising:
changing the specific information of another information unit by one information unit of the information units by changing own specific information or reading out previously registered fixed information and transmitting changed or read out information to another information unit; and
changing the specific information stored in the base unit by transmitting the changed specific information to the base unit from the information unit which is arranged most adjacently to the base unit among the information units.

4. A method for registering specific information to information units equipped with a communications function as subordinate units, the method comprising:
registering, in a radio wave shielding enclosure accommodating one or more the information units equipped with a communications function as subordinate units, the specific information to the one or more information units accommodated in the radio wave shielding enclosure from a base unit by way of a radio output for short range communications.

5. The method for registering specific information to an information unit according to claim 4, further comprising:
allowing the registration of specific information to one or more the information units accommodated in the radio wave shielding enclosure only when the radio wave shielding enclosure is shut and it is confirmed that the radio wave shielding enclosure is shielded from the outside in terms of wireless communications.

6. The method for registering specific information to an information unit according to claim 1, wherein the information unit is a sensor or an actuator, and wherein the radio output for short range communications is a faint radio wave, infrared rays, a sonic wave, a laser wave, or an oscillatory wave for short range communications.

7. A system for registering specific information to an information unit equipped with a communications function as a subordinate unit, the system comprising:
a base unit having a short range communications section for performing short range communications by way of a radio output for short range communications; and
an information unit equipped with a communications function as a subordinate unit arranged adjacently to the short range communications section of the base unit, the information unit having a short range communications section for performing short range communications by way of a radio output for short range communications, the information unit performing short range communications with the base unit by way of the radio output for short range communications via its short range communications section, the information unit performing short range communications with another adjacently arranged information unit as another subordinate unit by way of the radio output via its short range communications section to register the specific information to another information unit.

8. The system for registering specific information to an information unit according to claim 7, wherein one information unit of the information units has a function of changing own specific information or previously setting fixed information, the one information unit transmits changed or fixed information to another information unit and changes the specific information of the another information unit, and the information unit which is arranged most adjacently to the base unit among the information units transmits the changed specific information to the base unit and changes the specific information stored in the base unit.

9. A system for registering specific information to an information unit equipped with a communications function as a subordinate unit, the system comprising:
a base unit including a short range communications section for performing short range communications by way of a radio output for short range communications; and
one or more information units equipped with a communications function as subordinate units, which is accommodated in a radio wave shielding enclosure, and to which specific information is registered from the base unit by way of short range communications using radio output for short range communications.

10. A device for registering specific information to an information unit equipped with a communications function as a subordinate unit, the device comprising:
a short range communications section for transmitting a radio output for short range communications capable of communicating with only an information unit as a subordinate unit adjacently arranged;
a long range communications section for receiving specific information from the information unit arranged in a distance; and
a storage unit for storing an information unit information list which associates the data transmitted from the short range communications section to the data received by the long range communications section.

11. An information unit equipped with a communications function as a subordinate unit, the information unit comprising:
a short range communications section for transmitting a radio output for short range communications capable of communicating with only an adjacently arranged base unit for registering specific information and another adjacently arranged information unit as another subordinate unit;
a long range communications section for transmitting specific information to the base unit arranged in a distance; and
a specific information storage section for storing an information unit information list which associates the data received by the short range communications section to the data transmitted by the long range communications section.

12. A method for managing specific information to information units equipped with a communications function as subordinate units, the method comprising:
registering the specific information to a information unit equipped with a communications function as a subordinate unit arranged adjacently to a base unit from the base unit by way of a radio output for short-range communications communicable with only the information unit; and
registering the specific information to another information unit equipped with a communications function as another subordinate unit arranged adjacently to the information unit from the information unit by way of a radio output for short-range communications communicable with only the another information unit,
wherein the base unit manages the specific information set in information units equipped with a communications function as subordinate units by way of the radio.

13. A system for managing specific information to an information unit equipped with a communications function as a subordinate unit, the system comprising:
a base unit having a short range communications section for performing short range communications by way of a radio output for short range communications; and
an information unit equipped with a communications function as a subordinate unit arranged adjacently to the short range communications section of the base unit, the information unit having a short range communications section for performing short range communications by way of a radio output for short range communications, the information unit performing short range communications with the base unit by way of the radio output for short range communications via its short range communications section, the information unit performing short range communications with another adjacently arranged information unit as another subordinate unit by way of the radio output via its short range communications section to register the specific information to another information unit,
wherein the base unit manages the specific information set in information units equipped with a communications function as subordinate units by way of the radio..

14. The method for registering specific information to an information unit according to claim 1, wherein the registration of the specific information between adjacently arranged information units are repeatedly performed for other information units as subordinate units.

15. The method for managing specific information to information units according to claim 12, wherein the registration of the specific information between adjacently arranged information units are repeatedly performed for other information units as subordinate units.
